# EUROPÄISCHE PATENTANMELDUNG

(11) **EP 3 702 645 A1**
(43) Veröffentlichungstag der Anmeldung: **02.09.2020**
(21) Anmeldenummer: 20152098.8
(22) Anmeldetag: 16.01.2020
(51) Int. Cl.: F16H 47/04

(54) **ÜBERLAGERUNGSGETRIEBE**

(30) Priorität: 26.02.2019 DE 102019202562
(71) Anmelder: Robert Bosch GmbH, 70442 Stuttgart (DE)
(72) Erfinder: Pech, Marco, 59427 Unna (DE)

(57) **Zusammenfassung**

Offenbart ist ein Überlagerungsgetriebe für ein, insbesondere mobiles, Schredderwerk, mit einem mechanischen Leistungszweig mit einem mit einer Antriebsmaschine (19) koppelbaren Getriebeeingang (8), einem mit dem Schredderwerk koppelbaren Getriebeausgang (10) und einer ersten Planetengetriebestufe (20), über die der Getriebeeingang in übersetzter Drehverbindung mit dem Getriebeausgang ist oder zumindest in diese bringbar ist, und mit einem hydrostatischen Leistungszweig mit wenigstens einer ersten Hydromaschine (14, 16), deren erste Triebwelle in mittelbarem oder unmittelbarem Eingriff mit einem ersten Hohlrad (26) der ersten Planetengetriebestufe ist.

## Beschreibung

Die Erfindung betrifft ein Überlagerungsgetriebe gemäß dem Oberbegriff des Patentanspruchs 1.

Bei einem insbesondere mobilen Schredder werden einem Maschinenraum kontinuierlich zu zerkleinernde Recycling- oder Kompostiermengen zugeführt und von Zerkleinerungswalzen "geschreddert". Die Walzen sind beispielsweise von einem Dieselmotor über ein mehrstufiges Planetengetriebe angetrieben. Letztgenanntes reduziert eine Drehzahl des Dieselmotors und vergrößert das Drehmoment. Das Planetengetriebe weist dabei eine konstante Übersetzung auf. Somit bewegen sich bei einem konstant drehenden Dieselmotor die Zerkleinerungswalzen mit gleicher Geschwindigkeit und Drehrichtung.

Nachteilig hierbei ist, dass beispielsweise beim Verklemmen von Gegenständen eine Überlastung des Dieselmotors auftritt oder dass für einen zur Behebung der Verklemmung notwendigen Drehrichtungswechsel eine mechanisch aufwendige Kupplung und Getriebestufe vorzusehen sind.

Insbesondere um die Drehzahl den Bedürfnissen des zu zerkleinernden Materials flexibel anpassen zu können, schlägt die Druckschrift DE 20 2011 103 675 U1 vor, ein Planetengetriebe mit der Möglichkeit einer stufenlosen Übersetzung einzusetzen. Die stufenlose Übersetzung wird durch einen zusätzlichen hydrostatischen Leistungszweig ermöglicht. Dabei wird von einem Hydromotor des hydrostatischen Leistungszweigs ein Hohlrad der ersten Planetengetriebestufe über eine Außenverzahnung angetrieben. Der Hydromotor wird mit Druckmittel von einer Hydropumpe versorgt, die vom Dieselmotor angetrieben wird.

Zwar kann durch die stufenlose Übersetzung den genannten Nachteilen entgegengewirkt werden, jedoch baut das gesamte Getriebe radial groß. Dadurch ist der vom Getriebe benötigte Bauraum radial groß.

Eine konkrete technische Umsetzung dieser Lösung zeigt der mobile Schredder INVENTHOR TYPE 9 der Firma Doppstadt. Dabei ist des Weiteren nachteilig, dass zum Antrieb der Hydropumpe durch den Dieselmotor axial ein zusätzliches Pumpenverteilergetriebe vorgesehen ist, das zusätzlichen Bauraum und Wartungsaufwand benötigt.

Demgegenüber liegt der Erfindung die Aufgabe zugrunde, ein Überlagerungsgetriebe, insbesondere für ein Schredderwerk, zu schaffen, das bei gleichbleibender Flexibilität und Robustheit einen geringeren Gesamtbauraum benötigt.

Diese Aufgabe wird gelöst durch ein Überlagerungsgetriebe mit den Merkmalen des Patentanspruchs 1. Vorteilhafte Weiterbildungen der Erfindung sind in den abhängigen Patentansprüchen beschrieben.

Ein Überlagerungsgetriebe für ein, insbesondere mobiles, Schredderwerk, hat einen mechanischen Leistungszweig mit einem mit einer Antriebsmaschine koppelbaren Getriebeeingang, insbesondere einer Getriebeeingangswelle. Zudem hat es einen mit dem Schredderwerk koppelbaren Getriebeausgang, insbesondere eine Getriebeausgangswelle. Beide, Eingang und Ausgang, sind wenigstens über eine erste Planetengetriebestufe in übersetzter Drehverbindung oder sind zumindest darüber in Drehverbindung bringbar. Zusätzliche Planetengetriebestufen sind möglich, um die Übersetzung, insbesondere Untersetzung, zu verstärken. Des Weiteren hat das Überlagerungsgetriebe einen hydrostatischen Leistungszweig mit wenigstens einer ersten Hydromaschine, die insbesondere als Hydromotor ausgestaltet ist, deren erste Triebwelle in mittelbarem oder unmittelbarem Eingriff mit einem ersten Hohlrad der ersten Planetengetriebestufe ist. Erfindungsgemäß ist eine Drehachse der ersten Triebwelle innerhalb eines Durchmessers des ersten Hohlrades angeordnet. Insbesondere ist dies durch eine Anordnung der ersten Hydromaschine radial relativ zum ersten Hohlrad realisiert.

Verglichen mit der Lösung gemäß dem Stand der Technik, bei dem eine Außenverzahnung des Hohlrades über ein weiteres außenverzahntes Zwischenrad mit einer Außenverzahnung eines Ritzels der ersten Triebwelle der ersten Hydromaschine in Eingriff ist oder kämmt, und so zu einem in Radialrichtung großen Bauraumbedarf führt, ist der Bauraumbedarf erfindungsgemäß in dieser Richtung verringert.

In einer Weiterbildung ist darüber hinaus auch ein Gehäuse der ersten Hydromaschine, zumindest abschnittsweise, innerhalb des Durchmessers des ersten Hohlrades angeordnet. Dadurch ist der Bauraumgewinn in Radialrichtung noch größer gegenüber der herkömmlichen Lösung, bei der die erste Hydromaschine radial außen, seitlich angebaut ist.

In einer bevorzugten Weiterbildung sind mehrere, insbesondere zwei oder drei, derartige erste Hydromaschinen vorgesehen, deren erste Triebwellen in mittelbarem oder unmittelbarem Eingriff mit dem ersten Hohlrad der ersten Planetengetriebestufe sind. Auf diese Weise kann das erste Hohlrad bezüglich der aus den Eingriffen resultierenden Querkräfte symmetrischer belastet werden, was eine vereinfachte, weniger aufwendigere und kostengünstigere Lagerung des ersten Hohlrades ermöglicht.

Vorzugsweise sind alle Drehachsen der ersten Triebwellen der ersten Hydromaschinen innerhalb des Durchmessers des ersten Hohlrades angeordnet, wodurch der bereits beschriebene Vorteil verringerten radialen Bauraums vollumfänglich erreicht wird.

In einer bevorzugten Weiterbildung sind die Drehachsen oder die Eingriffe entlang einem Umfang des ersten Hohlrades gleichverteilt angeordnet. Bei zwei ersten Hydromaschinen, sind sie insbesondere diametral und bei drei ersten Hydromaschinen insbesondere im Umfangswinkelabstand von 120° angeordnet. Dies führt zu einer besonders gleichmäßigen und ggf. symmetrischen Querkraftbelastung des ersten Hohlrades mit dem bereits genannten Vorteil der vereinfachten Lagerung.

In einer bevorzugten Weiterbildung ist die wenigstens eine erste Triebwelle oder sind die mehreren ersten Triebwellen an einem Innenumfang des ersten Hohlrades in mittelbarem oder unmittelbarem Eingriff mit diesem ersten Hohlrad.

In einer bevorzugten Weiterbildung ist der wenigstens eine oder sind die mehreren Eingriffe von einer triebwellenseitigen Außenverzahnung, insbesondere eines jeweils drehfest mit der Triebwelle verbundenen Ritzels, und einer Innenverzahnung des ersten Hohlrades gebildet.

In einer bevorzugten Weiterbildung ist mit der wenigstens einen ersten Hydromaschine, insbesondere mit allen ersten Hydromaschinen, eine zweite Hydromaschine, insbesondere eine Hydropumpe, in einem, insbesondere geschlossenen, hydraulischen Kreis des Überlagerungsgetriebes fluidisch verbindbar oder verbunden.

In einer Weiterbildung ist eine dritte Hydromaschine, vorzugsweise eine Hydropumpe, insbesondere in offenem hydraulischen Kreis, zur Druckmittelversorgung weiterer Hydraulikaggregate vorgesehen. Eine dritte Triebwelle der dritten Hydromaschine ist insbesondere koaxial mit der zweiten Triebwelle der zweiten Hydromaschine verbunden, sofern diese einen Durchtrieb hat. Alternativ zum Durchtrieb ist die Kopplung/Befestigung der dritten Hydromaschine mit dem oder an dem Überlagerungsgetriebe derart, wie es zur zweiten Hydromaschine beschrieben wurde und im Folgenden noch beschrieben wird.

Die zweite und die dritte Triebwelle sind bevorzugt bezüglich der Längsachse des Überlagerungsgetriebes um 180° versetzt, insbesondere diametral angeordnet. Sie sind jeweils mit einem geradverzahnten Ritzel verbunden, wobei die Ritzel in das gleiche Stirnrad der Getriebeeingangswelle eingreifen.

Eine zweite Triebwelle der zweiten Hydromaschine ist in einer bevorzugten Weiterbildung in Drehverbindung mit dem Getriebeeingang oder zumindest in diese Drehverbindung bringbar. Auf diese Weise kann die zweite Hydromaschine, wie auch der mechanische Leistungszweig, insbesondere die erste Planetengetriebestufe, von der gleichen Antriebsmaschine angetrieben sein.

In einer Variante ist die zweite Triebwelle in mittelbarem Eingriff mit dem Getriebeeingang. Eine vorrichtungstechnisch einfache Lösung hierfür ist, wenn sowohl die zweite Triebwelle als auch die Getriebeeingangswelle ein insbesondere geradverzahntes Ritzel aufweisen, die miteinander in Eingriff sind. In einer vorrichtungstechnisch aufwendigeren Lösung ist die zweite Triebwelle mit der Getriebeeingangswelle über ein Pumpenverteilergetriebe in Eingriff.

In einer bevorzugten Weiterbildung ist eine Drehachse der zweiten Hydromaschine zu einer Drehachse des Getriebeeingangs, insbesondere parallel, beabstandet und innerhalb des Durchmessers des ersten Hohlrades angeordnet.

In einer bevorzugten Weiterbildung ist die zweite Hydromaschine mit verstellbarem Verdrängungsvolumen ausgestaltet. Insbesondere bietet sich die Ausgestaltung als Axialkolbenmaschine in Schrägscheibenbauweise mit verschwenkbarer Schrägscheibe an. Abweichend davon können andere Bauformen gewählt werden.

In einer bevorzugten Weiterbildung weist wenigstens eine der genannten Hydromaschinen ein verstellbares Verdrängungsvolumen auf. Auf diese Weise können die Drehzahl und / oder das Drehmoment, das von der oder den ersten Hydromaschinen an das erste Hohlrad übertragen werden kann, flexibel variiert werden.

In einer bevorzugten Weiterbildung ist wenigstens eine der Hydromaschinen, insbesondere die zweite Hydromaschine, in ihrem Verdrängungsvolumen verstellbar und reversierbar, sodass durch eine Verstellung des betreffenden Verdrängungsvolumens über einen Nullwert hinweg bei gleichbleibender Drehrichtung des Getriebeeingangs, und damit insbesondere der Antriebsmaschine, eine Strömungsumkehr im hydraulischen Kreis und damit eine Drehrichtungsumkehr der ersten Triebwelle oder der ersten Triebwellen bewirkt werden kann. Auf diese Weise kann, ohne komplizierte Schalt- und Kupplungsvorrichtungen, eine Walze des Schredderwerks in umgekehrter Richtung drehen und Verklemmungen oder Verwicklungen aufgelöst werden. Besonders bietet sich hierfür die zweite Hydromaschine in reversierbarer Ausgestaltung an, insbesondere wenn mehrere erste Hydromaschinen am ersten Hohlrad in Eingriff sind.

Alternativ oder ergänzend dazu ist eine Strömungsumkehr realisierbar, indem ein Wegeventil, insbesondere ein 4/2-Wegeventil zur Steuerung des geschlossenen hydraulischen Kreises vorgesehen ist. Dann können die Hydromaschinen, insbesondere die zweite Hydromaschine, sogar mit konstantem Verdrängungsvolumen und konstanter Drehrichtung ausgestaltet sein und bei gleichbleibender Drehrichtung der zweiten Hydromaschine kann die Strömungsumkehr durch wechselnde Verschaltung der Druckanschlüsse über das Wegeventil erfolgen.

In einer Weiterbildung mit mehreren ersten Hydromaschinen ist deren Verdrängungsvolumen konstant. Konstantmaschinen haben vorteilhafter Weise einen hohen Wirkungsgrad.

Bei angenommener gleichbleibender Drehzahl der Antriebsmaschine, und damit auch der zweiten Hydromaschine, stellt sich diese Fortbildung als vorrichtungstechnisch einfach mit hohem Wirkungsgrad, jedoch auch als vergleichsweise unflexibel in Drehzahl und Drehmoment dar.

Alternativ oder ergänzend kann daher beispielsweise wenigstens eine der ersten Hydromaschinen, oder die wenigstens eine erste Hydromaschine, ein verstellbares Verdrängungsvolumen aufweisen.

In einer bevorzugten Weiterbildung weisen die ersten Hydromaschinen, unabhängig davon, ob verstellbar oder konstant, ein zumindest vergleichbares, maximales Verdrängungsvolumen, insbesondere gleiches maximales Verdrängungsvolumen auf.

Eine Ausgestaltung mit mehreren kleinen ersten Hydromaschinen, anstatt mit nur einer großen, bringt einen höheren Wirkungsgrad mit sich und kann bei Ausfall einer der ersten Hydromaschinen den Betrieb - aufgrund von Redundanz - weiterhin gewährleisten.

In einer bevorzugten Weiterbildung hat das Überlagerungsgetriebe ein Gehäuse, innerhalb dem zumindest der mechanische Leistungszweig angeordnet ist.

Vorzugsweise hat das Überlagerungsgetriebe ein Gehäuse mit einem stirnseitigen Gehäuseabschnitt, an dem wenigstens eine der genannten Hydromaschinen stirnseitig angeflanscht oder befestigt ist. Diese Befestigungsweise stellt eine einfache Möglichkeit zur Minderung des radial beanspruchten Bauraums dar.

Sind in dem Gehäuseabschnitt zudem die kämmenden Drehverbindungen der Getriebeeingangswelle mit der zweiten Triebwelle und / oder der ersten Triebwelle mit dem ersten Hohlrad und / oder das Pumpenverteilergetriebe angeordnet, so resultiert daraus ein geringerer Wartungsaufwand durch einen gemeinsamen Ölhaushalt mit dem mechanischen Leistungszweig des Überlagerungsgetriebes.

In einer Weiterbildung ist, insbesondere im Gehäuseabschnitt, ein Getriebe zur übersetzten Drehverbindung der wenigstens einen ersten Triebwelle oder der ersten Triebwellen mit dem ersten Hohlrad vorgesehen.

In eine Weiterbildung ist über dieses Getriebe die wenigstens eine erste Triebwelle derart weit radial innen angeordnet, dass auch ein Gehäuse der wenigstens einen ersten Hydromaschine radial innerhalb oder zumindest überwiegend radial innerhalb des Durchmessers angeordnet ist.

Ein Ausführungsbeispiel eines erfindungsgemäßen Überlagerungsgetriebes eines Schredders oder Schredderwerks ist in den Zeichnungen dargestellt. Anhand der Figuren dieser Zeichnungen wird die Erfindung nun näher erläutert.

Es zeigen:
Figur 1 in einer perspektivischen Ansicht ein erfindungsgemäßes Überlagerungsgetriebe mit Planetengetriebe, Hydropumpe und Hydromotoren, gemäß einem ersten Ausführungsbeispiel,
Figur 2 das Überlagerungsgetriebe gemäß Figur 1 in einem Längsschnitt, gemäß der Schnittebene A gemäß Figur 1,
Figur 3 das Überlagerungsgetriebe gemäß den Figuren 1 und 2 in einem Längsschnitt, gemäß der Schnittebene B gemäß Figur 1,
Figur 4 ein Getriebeschema des Überlagerungsgetriebes gemäß den vorangegangenen Figuren,
Figur 5 einen hydraulischen Schaltplan eines hydraulischen Leistungszweiges des Überlagerungsgetriebes gemäß den vorangegangenen Figuren,
Figur 6 einen Leistungsfluss des Überlagerungsgetriebes gemäß den vorangegangenen Figuren in einem Schnellbetrieb,
Figur 7 einen Leistungsfluss des Überlagerungsgetriebes gemäß den vorangegangenen Figuren in einem Direktbetrieb,
Figur 8 einen Leistungsfluss des Überlagerungsgetriebes gemäß den vorangegangenen Figuren in einem Langsambetrieb,
Figur 9 einen Leistungsfluss des Überlagerungsgetriebes gemäß den vorangegangenen Figuren in einem Freidrehen,
Figur 10 einen Leistungsfluss des Überlagerungsgetriebes gemäß den vorangegangenen Figuren in einem Rückwärtsbetrieb, und
Figur 11 ein Drehzahl-Übersetzungsdiagramm des Überlagerungsgetriebes gemäß den vorangegangenen Figuren.

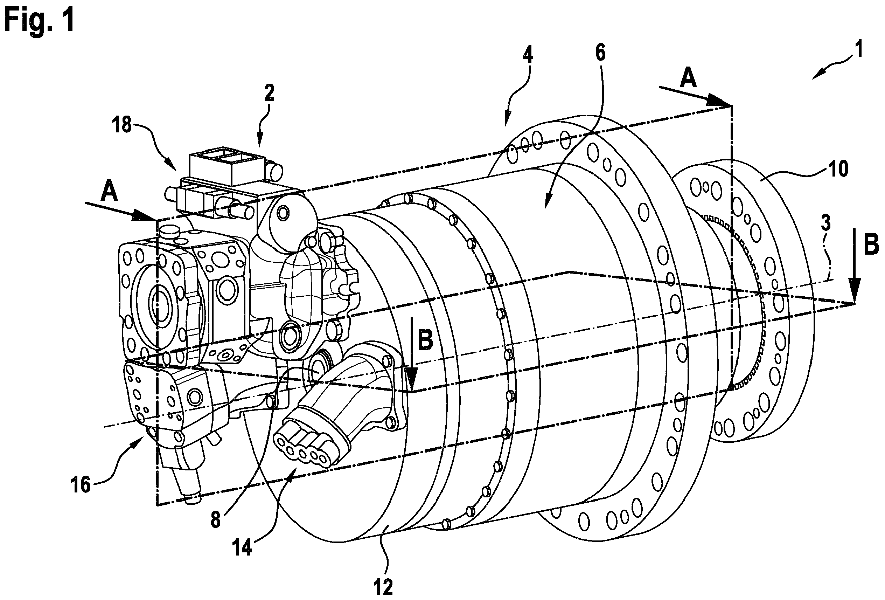

Figur 1 zeigt eine perspektivische Ansicht eines Ausführungsbeispiels eines Überlagerungsgetriebes 1 für einen Schredder. Es dient der Kraftübertragung von einer Antriebsmaschine (nicht dargestellt) an eine oder mehrere Schredderwalzen (ebenso nicht dargestellt). Es hat zwei Leistungszweige, einen hydraulischen Leistungszweig in Form eines hydrostatischen Getriebes 2 und einen mechanischen Leistungszweig in Form eines Planetengetriebes 4. Letztgenanntes hat ein im Wesentlichen stufenzylindrisches Gehäuse 6. Das Überlagerungsgetriebe 1 hat an einer Stirnseite des Gehäuses 6 einen Getriebeeingang 8 und gegenüberliegend einen Getriebeausgang 10. Der Getriebeeingang 8 ist als innenverzahnte Hohlwelle und der Getriebeausgang 10 als Hohlwelle mit Ringflansch ausgestaltet. Seitens des Getriebeeingangs 8 ist am Gehäuse 6 ein tellerförmiger Gehäuseabschnitt 12 vorgesehen, über den Komponenten des hydrostatischen Getriebes 2 am Gehäuse 6 befestigt sind. Die Befestigung erfolgt dabei über Schraubverbindungen.

Das hydrostatische Getriebe 2 weist zwei, insbesondere als Hydromotore ausgestaltete, erste Hydromaschinen 14, 16 auf, wobei die erste Hydromaschine 14 mit konstantem und die andere erste Hydromaschine 16 mit verstellbarem Verdrängungsvolumen ausgestaltet ist. Die ersten Hydromaschinen 14, 16 sind als Axialkolbenmaschine in Schrägachsenbauweise vorgesehen und weisen das gleiche maximale Verdrängungsvolumen auf. Sie sind am Gehäuseabschnitt 12, bezogen auf eine Längsachse 3 des Gehäuses 6, des Getriebeeingangs 8 und des Getriebeeingangs 10, diametral angeordnet. Des Weiteren hat das hydrostatische Getriebe 2 eine zweite Hydromaschine 18, die zur Druckmittelversorgung der ersten Hydromaschinen 14, 16 als Hydropumpe betreibbar ausgestaltet ist. Deren Verdrängungsvolumen ist verstellbar, wobei dies im gezeigten Ausführungsbeispiel durch die Ausgestaltung als Axialkolbenmaschine in Schrägscheibenbauweise mit verschwenkbarer Schrägscheibe realisiert ist.

Der ebenso zylindrische Gehäuseabschnitt 12 stellt ein Gehäuse eines Pumpenverteilergetriebes dar, das in axialer Verlängerung des Gehäuses 6 des Planetengetriebes angeordnet ist, und über das eine Triebwelle der zweiten Hydromaschine in Drehverbindung mit dem Getriebeeingang 8 ist.

Die beiden ersten Hydromaschinen 14, 16 sind mit der zweiten Hydromaschine 18 in geschlossenem hydraulischen Kreis fluidisch parallel verbunden. In der zweiten Hydromaschine 18 ist dabei die Druckabsicherung des hydraulischen Kreises durch ein oder mehrere Druckbegrenzungsventile realisiert.

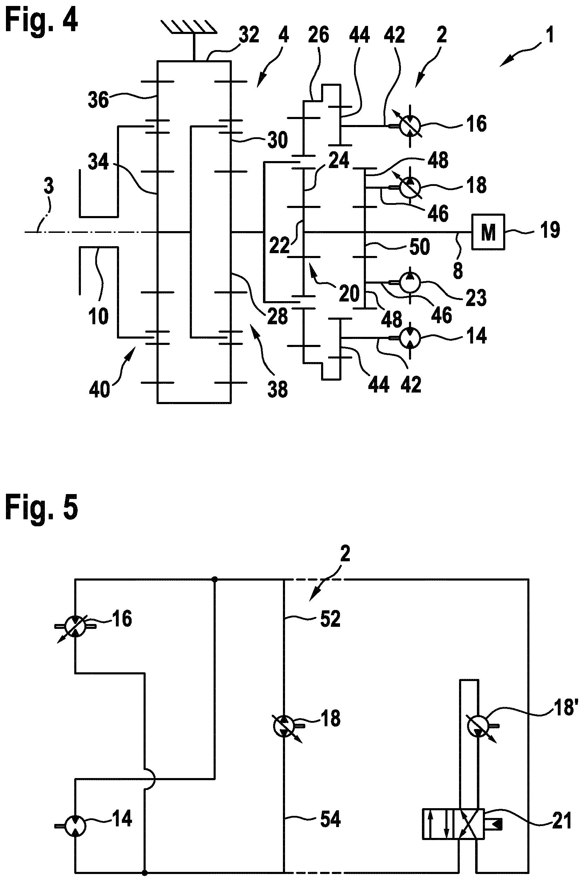

Figur 4 zeigt einen schematischen Aufbau des Überlagerungsgetriebes 1. Dargestellt ist die bereits erwähnte Antriebsmaschine 19, die jedoch nicht zwingend zum Umfang des Überlagerungsgetriebes 1 gehört. Der Getriebeeingang 8 ist als Getriebeeingangswelle und der Getriebeausgang 10 als Getriebeausgangswelle wie vorbeschrieben ausgestaltet. Dazwischen erstreckt sich rotationssymmetrisch zur Längsachse 3 das Planetengetriebe 4. Dieses hat eine erste Stufe 20 mit einem ersten Sonnenrad 22, das drehfest mit dem Getriebeeingang 8 verbunden ist, erste Planetenräder 24, die radial innen mit dem ersten Sonnenrad 22 und radial außen mit einem ersten Hohlrad 26 in Eingriff sind. Des Weiteren hat das Planetengetriebe 4 eine zweite Stufe 38 und eine dritte Stufe 40. Die zweite Stufe 38 hat ein zweites Sonnenrad 28, mit dem die ersten Planetenräder 24 umfänglich gleichverteilt und jeweils drehbar verbunden sind. Mit dem zweiten Sonnenrad 28 in Eingriff sind die zweiten Planetenräder 30, die radial außen mit einer Innenverzahnung eines feststehenden, zweiten Hohlrades 32 in Eingriff sind. Die zweiten Planetenräder 30 sind mit einem dritten Sonnenrad 34 der dritten Stufe 40 umfänglich gleichverteilt und jeweils drehbar verbunden. Das dritte Sonnenrad 34 ist in Eingriff mit dritten Planetenrädern 36, die radial außen wiederum am feststehenden zweiten Hohlrad 32 abrollen / eingreifen. Die dritten Planetenräder 36 sind wiederum umfänglich gleichverteilt und jeweils drehbar mit dem Getriebeausgang 10 verbunden.

Des Weiteren zeigt Figur 4 die erste Hydromaschine 14 mit konstantem Verdrängungsvolumen, die andere erste Hydromaschine 16 mit verstellbarem Verdrängungsvolumen und die zweite Hydromaschine 18 ebenso mit verstellbarem Verdrängungsvolumen. Eine dritte Hydromaschine 23 ist zur Druckmittelversorgung weiterer hydraulischer Aggregate im offenen hydraulischen Kreis vorgesehen. Nicht dargestellt ist die umfängliche Verteilung der Hydromaschinen 14, 16, 18, 23 um die Längsachse 3 herum. Dabei sind die Hydromaschinen des jeweiligen Paares 14,16, bzw. 18, 23 zueinander diametral, auf "3 Uhr" und "9 Uhr", bzw. auf "12 Uhr" und "18 Uhr" angeordnet. Die ersten Hydromaschinen 14, 16 sind über ihre jeweilige erste Triebwelle 42 und ein daran drehfest angeordnetes erstes Ritzel 44 in Eingriff mit einer Innenverzahnung des ersten Hohlrades 26. Die zweite, bzw. dritte Hydromaschine 18, 23 ist jeweils über ihre zweite, bzw. dritte Triebwelle 46 und ein daran drehfest angeordnetes Ritzel 48 in drehfestem Eingriff mit einem Stirnrad 50 des Getriebeeingangs 8.

Figur 5 zeigt die hydraulische Druckmittelversorgung der ersten Hydromaschinen 14, 16 über die zweite Hydromaschine 18 in einem geschlossenen hydraulischen Kreis und in hydraulisch paralleler Schaltung. Hierzu ist die zweite Hydromaschine 18 über eine verzweigte, erste Arbeitsleitung 52 an beide ersten Hydromaschinen 14, 16 angeschlossen. Ein anderer Arbeitsanschluss der zweiten Hydromaschine 18 ist über eine zweite Arbeitsleitung 54, die ebenso verzweigt ist, an beide erste Hydromaschinen 14, 16 angeschlossen.

Ergänzend ist eine alternative zweite Hydromaschine 18' mit konstanter Drehrichtung und mit nicht reversiblem Verdrängungsvolumen dargestellt. Zur Invertierung des Druckmittelvolumenstroms und damit der Drehrichtungen der ersten Hydromaschinen 14, 16 ist ein 4/2-Wege-Schaltventil 21 vorgesehen, über das die zweite Hydromaschine 18' richtungswechselnd in Druckmittelverbindung mit den Arbeitsleitungen 52, 54 bringbar ist.

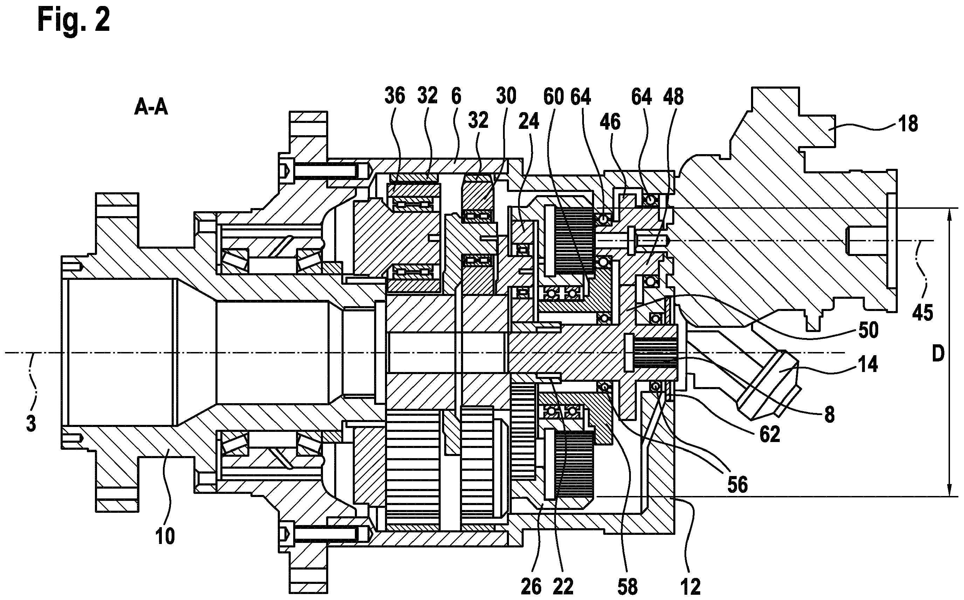

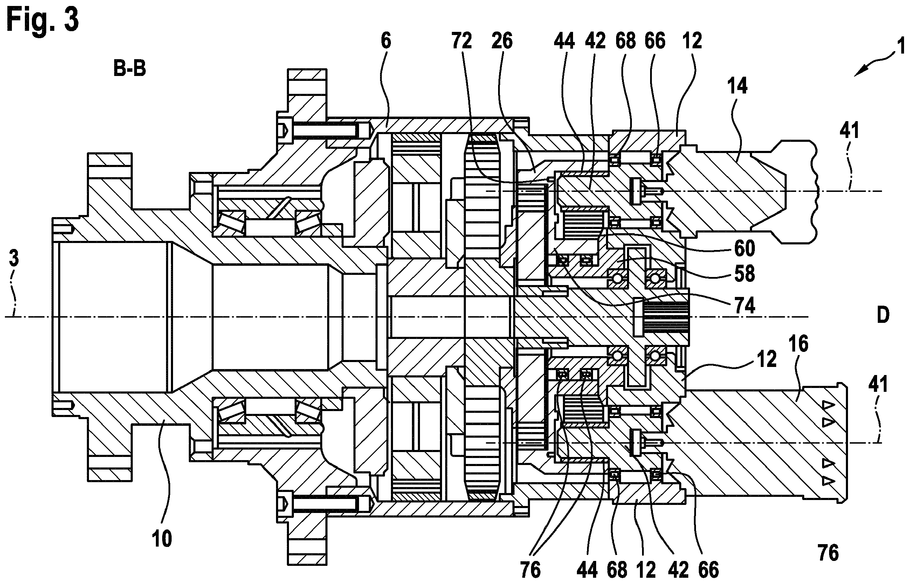

Figur 2 zeigt einen Schnitt A-A durch das Überlagerungsgetriebe 1, wie er in Figur 1 durch die Ebene A-A definiert ist, Figur 3 zeigt den Schnitt gemäß der Ebene B-B. Eine als Dieselmotor ausgestaltete Antriebsmaschine (vgl. 19, Figur 4) treibt das Überlagerungsgetriebe 1 mit konstanter Antriebsdrehzahl über die Getriebeeingangswelle 8 an. Diese ist im gezeigten Ausführungsbeispiel über Kegelrollenlager 56 im Gehäuseabschnitt 12 in X-Anordnung um die Längsachse 3 drehbar gelagert. Sollte eine Welle, die die Antriebsmaschine mit der Getriebeeingangswelle 8 verbindet, bereits gelagert sein, so können alternativ andere Wälzlagertypen Verwendung finden. Ein Lagergehäuse 58 ist über Zylinderschrauben 60 mit dem Gehäuseabschnitt 12 verbunden, so dass eine gewünschte Vorspannung der Kegelrollenlager 56 über eine auf Maß geschliffene Scheibe, die sich zwischen dem Lagergehäuse 58 und einem Außenring des Kegelrollenlagers 56 befindet, erzielt werden kann. Durch diese Lagerung können Stöße und Unwucht, zum Beispiel aus Gelenkwellen, Kupplungen oder Schwungmassen, die von außen auf das Überlagerungsgetriebe 1 wirken, gut von den Kegelrollenlagern 56 aufgenommen werden. Zur Umgebung ist die Getriebeeingangswelle 8 über einen Radialwellendichtring 62 abgedichtet. Über eine Zahnwellenverbindung ist die Getriebeeingangswelle 8 mit dem Sonnenrad 22 der ersten Getriebestufe 20 des Planetengetriebes 4 formschlüssig verbunden. Ein auf der Getriebeeingangswelle 8 befindliches, geradverzahntes Stirnrad 50 ist mit einem Ritzel 48 der zweiten Triebwelle 46 der zweiten Hydromaschine 18 in Eingriff. Die zweite Triebwelle 46 ist über zwei Radialrillenkugellager 64 im Gehäuseabschnitt 12 schwimmend, um ihre Drehachse 45 drehbar gelagert. Die Drehachse 45 ist dabei innerhalb eines Durchmessers D des ersten Hohlrades 26 angeordnet, wodurch das Überlagerungsgetriebe 1 gegenüber dem Stand der Technik radial vergleichsweise schmal baut. Über sie ist die verstellbare zweite Hydromaschine 18 mit konstanter Drehzahl angetrieben.

Letztgenannte liefert den benötigten Druckmittelvolumenstrom für die beiden ersten Hydromaschinen 14, 16. Diese weisen jeweils eine erste Triebwelle 42 auf, die fliegend und um ihre Drehachse 41 drehbar im Gehäuseabschnitt 12 gelagert ist. Auch die Drehachsen 41 sind innerhalb eines Durchmessers D angeordnet, weshalb das Überlagerungsgetriebe 1, wie oben erwähnt, erfindungsgemäß radial schmal baut. Die ersten Triebwellen 42 sind dabei jeweils über ein Radialrillenkugellager 66 als Festlager und ein Zylinderrollenlager 68 als Loslager gelagert. Über eine Passfeder ist das Ritzel 44 formschlüssig mit der ersten Triebwelle 42 verbunden. Die Außenverzahnungen der beiden jeweils geradverzahnten Ritzel 44 kämmen dabei mit der geradverzahnten Innenverzahnung des ersten Hohlrades 26 und treiben dieses an. Das erste Hohlrad 26 ist über Zylinderschrauben 72 mit einem Hohlradflansch 74 verbunden. Letztgenannter ist radial über zwei Radialrillenkugellager 76 drehbar auf dem Lagergehäuse 58 abgestützt. Im ersten Hohlrad 26 ist auch eine Innenverzahnung zum Eingriff mit den ersten Planetenrädern 24 der ersten Getriebestufe 20 des Planetengetriebes 4 integriert. Somit kann eine Drehzahl und Drehrichtung der ersten Getriebestufe 20 des Planetengetriebes 4 direkt von den ersten Hydromaschinen 14, 16 gesteuert und variiert werden. Durch eine Variation der genannten Drehzahl ändert sich bei konstanter Drehzahl n₈ der Getriebeeingangswelle 8 die gesamte Übersetzung i und damit die Abtriebsdrehzahl n₁₀ des Überlagerungsgetriebes 1.

Die Zahnräder der Getriebeeingangswelle und der zweiten Triebwelle können alternativ als separate Bauteile ausgeführt sein. Anstelle einer Passfeder kann auch eine andere Form der Welle-Nabe-Verbindung gewählt werden, zum Beispiel eine Zahnwellenverbindung. Das Ritzel und die ersten Triebwellen können alternativ einteilig als Ritzelwelle ausgeführt sein.

Anstelle der genannten Flanschverbindung über Zylinderschrauben kann alternativ eine andere Form der Welle-Nabe-Verbindung vorgesehen sein, zum Beispiel eine Zahnwellenverbindung, um das Drehmoment vom ersten Hohlrad auf den Hohlradflansch zu übertragen. Das erste Hohlrad und der Hohlradflansch können alternativ einteilig oder einstückig ausgeführt sein. Anstelle von Kegelrollenlagern in X-Anordnung kann eine O-Anordnung vorgesehen sein. Weiterhin sind Schrägkugellager anstelle der Kegelrollenlager in X- oder O-Anordnung möglich. Anstelle von Radialrillenkugellagern kann mindestens ein großes Radialrillenkugellager, das zwischen erstem Hohlrad und dem Gehäuseabschnitt angeordnet ist, vorgesehen sein. In diesem Fall können insbesondere der Hohlradflansch sowie die Zylinderschrauben entfallen. Grundsätzlich können alle Wälzlager im Überlagerungsgetriebe durch andere Wälzlagertypen ersetzt sein. Idealerweise sollten alle ersten Hydromaschinen ein gleiches oder zumindest vergleichbares Schluck- oder Verdrängungsvolumen aufweisen.

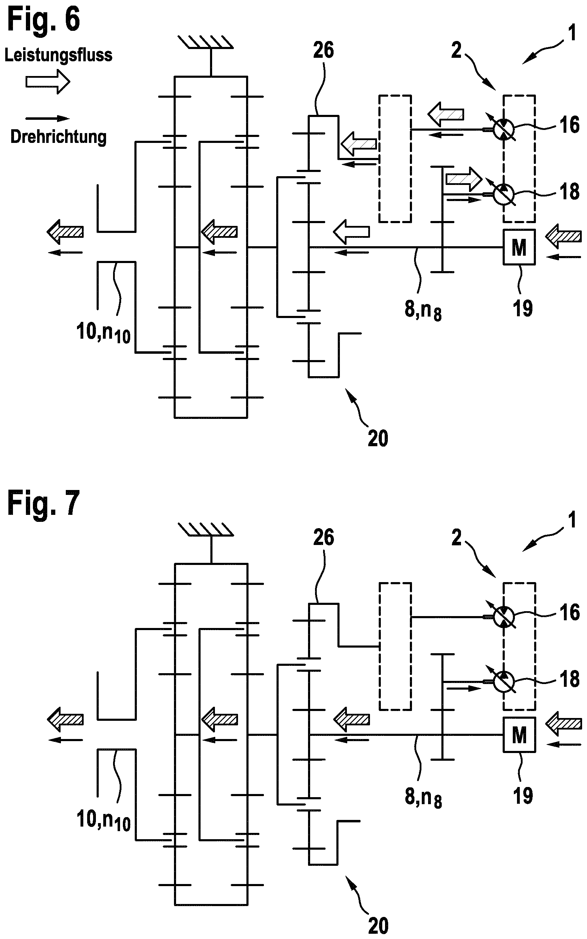

Anhand der Figuren 6 bis 10 werden im Folgenden verschiedene Betriebszustände des Überlagerungsgetriebes 1 beschrieben, die dessen Flexibilität verdeutlichen. Zur vereinfachten Darstellung wird auf die Darstellung der ersten Hydromaschine 14 mit konstantem Verdrängungsvolumen, sowie der dritten Hydromaschine 23 verzichtet. Es sind lediglich die erste Hydromaschine 16 und die zweite Hydromaschine 18 dargestellt. Für alle Figuren 6 bis 10 gilt, dass der dicke Pfeil jeweils die lokale Richtung des Leistungsflusses und der dünne Pfeil jeweils die lokale Drehrichtung symbolisiert. Mit zunehmend dichter Schraffur des dicken Pfeils nimmt der lokale Leistungsfluss zu. Zudem sind die Drehzahl n₈ der Getriebeeingangswelle 8 und die Drehzahl n₁₀ der Getriebeausgangswelle 10 genannt.

In einem Schnellbetrieb gemäß Figur 6 ist im genannten Ausführungsbeispiel, wie in allen anderen Betriebsarten auch, die Drehzahl der Antriebsmaschine oder Dieselmotors n₈ = konstant. Im Schnellbetrieb ergibt sich je nach Drehzahl der ersten Hydromaschine 16 eine stufenlos verstellbare Übersetzung i = n₈/n₁₀ = 45 bis 107. An der ersten Planetengetriebestufe 20 folgt dabei eine Leistungssummierung. Es liegt ein guter Wirkungsgrad vor.

Figur 7 zeigt einen Direktbetrieb, in dem der Volumenstrom der Hydromaschinen 14, 16, 18 auf null gestellt ist. Demgemäß erfolgt der Leistungsfluss rein mechanisch. Hier liegt ein optimaler Wirkungsgrad vor. Das Übersetzungsverhältnis des Getriebes ist dabei i = 107.

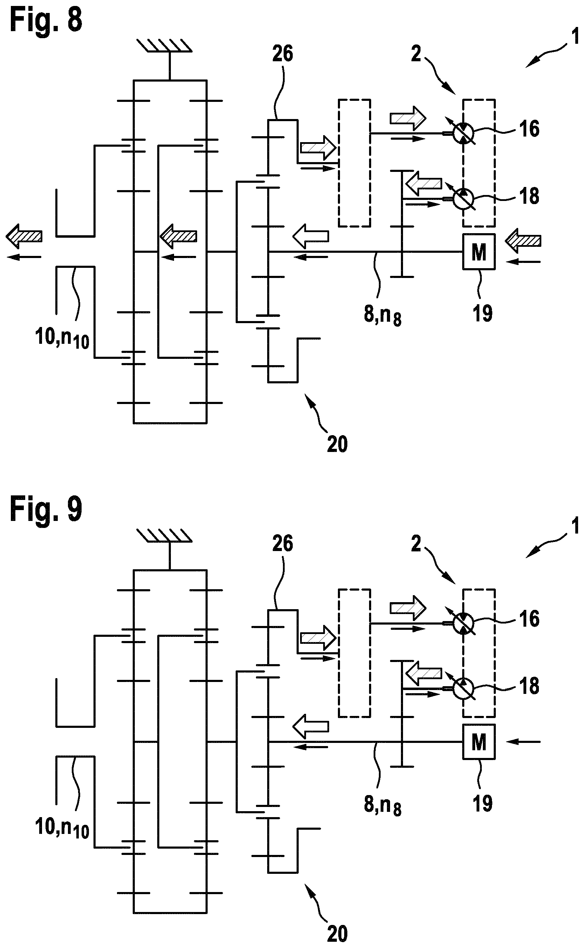

In einem Langsambetrieb gemäß Figur 8 kann durch Umkehrung des Volumenstroms der Hydromaschinen 14, 16, 18 ein Blindleistungsfluss vom ersten Hohlrad 26 über die ersten Hydromaschinen 14, 16 und die zweite Hydromaschine 18 zurück zur Getriebeeingangswelle 8 erfolgen. Demzufolge kann die Drehzahl n₁₀ der Getriebeausgangswelle 10 auf Werte bis hin zu 0/min abgesenkt werden. Das Übersetzungsverhältnis kann je nach Drehzahl n_{HM} der ersten Hydromaschinen 14, 16 stufenlos von i = 107 bis theoretisch unendlich verstellt werden.

In der Sonderbetriebsart Freidrehen gemäß Figur 9 werden die Verdrängungsvolumina im Langsambetrieb derart eingestellt, dass die ersten Planetenräder 24 der ersten Planetengetriebestufe 20 ortsfest bleiben. Demzufolge erfolgt lediglich der genannte Blindleistungsfluss, und die Getriebeausgangswelle 10 steht still und weist eine Drehzahl n₁₀ = 0/min auf. Die Übersetzung beträgt theoretisch i = unendlich.

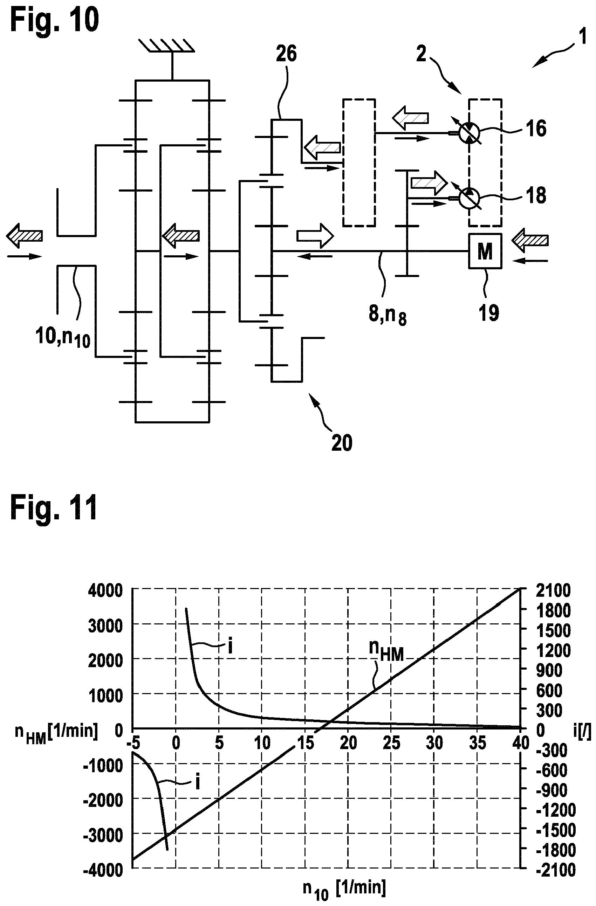

Der Rückwärtsbetrieb gemäß Figur 10 stellt sich als Sonderbetriebsart im Langsambetrieb bei sehr hohen Drehzahlen n_{HM} der ersten Hydromaschinen 14, 16 ein. Dies führt dazu, dass sich die Drehrichtung der Getriebeausgangswelle 10 invertiert. Es ergeben sich Übersetzungen von i = -360 bis theoretisch unendlich. Auch hier liegt ein Blindleistungsfluss, jedoch in umgekehrter Richtung, vor.

Figur 11 zeigt in Abhängigkeit der Drehzahl n₁₀ der Getriebeausgangswelle 10 das Übersetzungsverhältnis i = n₈/n₁₀ und die Drehzahl n_{HM} der Hydromotoren, das heißt der ersten Hydromaschinen 14, 16. Demnach sind folgende Betriebsbereiche definiert: Ein stufenloses Getriebe bei konstanter Drehzahl n₈ der Antriebsmaschine 19, welche zu variablen Drehzahlwerten für n₁₀ in beiden Drehrichtungen führt; eine rein mechanische Leistungsübertragung für einen optimalen Wirkungsgrad im Direktbetrieb; sowie einen Blockadeschutz gegen Überlastung (Freidrehen) mit einem Stopp der Getriebeausgangswelle, also mit n₁₀ = 0, bei gleichzeitig konstanter Antriebsdrehzahl der Antriebsmaschine 19.

Offenbart ist ein Überlagerungsgetriebe, insbesondere für einen Schredder, mit einem mechanischen Leistungszweig und einem hydraulischen Leistungszweig. Dabei ist eine außenverzahnte Triebwelle - oder ein mit der Triebwelle verbundenes Ritzel - einer als Hydromotor betreibbaren Hydromaschine des hydraulischen Leistungszweiges in Eingriff mit einer Innenverzahnung eines Hohlrades einer Planetengetriebestufe des mechanischen Leistungszweiges.

## Patentansprüche

1. Überlagerungsgetriebe für ein, insbesondere mobiles, Schredderwerk (1), mit einem mechanischen Leistungszweig mit einem mit einer Antriebsmaschine (19) koppelbaren Getriebeeingang (8), einem mit dem Schredderwerk koppelbaren Getriebeausgang (10) und einer ersten Planetengetriebestufe (20), über die der Getriebeeingang (8) in übersetzter Drehverbindung mit dem Getriebeausgang (10) ist oder zumindest in diese bringbar ist, und mit einem hydrostatischen Leistungszweig (2) mit wenigstens einer ersten Hydromaschine (14, 16), deren erste Triebwelle (42) in mittelbarem oder unmittelbarem Eingriff mit einem ersten Hohlrad (26) der ersten Planetengetriebestufe (20) ist, **dadurch gekennzeichnet, dass** eine Drehachse (41) der ersten Triebwelle (42) innerhalb eines Durchmessers (D) des ersten Hohlrades (26) angeordnet ist.

2. Überlagerungsgetriebe nach Anspruch 1 mit mehreren, insbesondere zwei, derartigen ersten Hydromaschinen (14, 16), deren erste Triebwellen (42) in mittelbarem oder unmittelbarem Eingriff mit dem ersten Hohlrad (26) sind.

3. Überlagerungsgetriebe nach Anspruch 2, wobei die Drehachsen (41) und / oder Eingriffe entlang einem Umfang des ersten Hohlrades (26) gleichverteilt angeordnet sind.

4. Überlagerungsgetriebe nach einem der vorhergehenden Ansprüche, wobei die wenigstens eine erste Triebwelle (42) an einem Innenumfang des ersten Hohlrades (26) in mittelbarem oder unmittelbarem Eingriff mit diesem ist.

5. Überlagerungsgetriebe nach einem der vorhergehenden Ansprüche, wobei der Eingriff von einer triebwellenseitigen Außenverzahnung und einer Innenverzahnung des ersten Hohlrades (26) gebildet ist.

6. Überlagerungsgetriebe nach einem der vorhergehenden Ansprüche mit einer mit der wenigstens einen ersten Hydromaschine (14, 16) in hydraulischem Kreis fluidisch verbindbaren oder verbundenen zweiten Hydromaschine (18, 18').

7. Überlagerungsgetriebe nach Anspruch 6, wobei eine zweite Triebwelle (46) der zweiten Hydromaschine (18) mit dem Getriebeeingang (8) in Drehverbindung ist oder zumindest bringbar ist, wobei eine Drehachse (45) der zweiten Triebwelle (46) zu einer Drehachse (3) des Getriebeeingangs (8) beabstandet und innerhalb des Durchmessers (D) des ersten Hohlrades (26) angeordnet ist.

8. Überlagerungsgetriebe nach Anspruch 7, wobei die zweite Triebwelle (46) in mittelbarem oder unmittelbarem Eingriff mit dem Getriebeeingang (8) ist.

9. Überlagerungsgetriebe nach einem der vorhergehenden Ansprüche, wobei wenigstens eine der Hydromaschinen (16, 18, 18') ein verstellbares Verdrängungsvolumen hat.

10. Überlagerungsgetriebe nach einem der vorhergehenden Ansprüche, wobei wenigstens eine der Hydromaschinen (18) ein reversierbares Verdrängungsvolumen hat, und / oder wobei ein 2-Wegeventil (21) zur Invertierung der Strömungsrichtung vorgesehen ist.
